(19) Europäisches Patentamt
European Patent Office
Office européen des brevets

(11) EP 0 724 262 A2

## (12) EUROPEAN PATENT APPLICATION

(43) Date of publication:
31.07.1996 Bulletin 1996/31

(51) Int Cl.⁶: **G11B 20/10, H04L 25/497**

(21) Application number: 96300257.1

(22) Date of filing: 15.01.1996

(84) Designated Contracting States:
**DE FR GB**

(30) Priority: 30.01.1995 US 380790

(71) Applicant: **Hewlett-Packard Company**
**Palo Alto, California 94304 (US)**

(72) Inventors:
• **Bauch, Richard A.**
**Palo Alto, California 94306 (US)**
• **Chiu, Ran-Fun**
**Los Altos, California 94022 (US)**

(74) Representative: **Powell, Stephen David et al**
**WILLIAMS, POWELL & ASSOCIATES**
**34 Tavistock Street**
**London WC2E 7PB (GB)**

(54) **Class 4 partial response using peak sampling**

(57) In a signal processing system and method for achieving Class 4 overall-system partial response output characteristics for a signal that is sampled (66) at a zero degree phase shift with respect to initiation of symbol intervals, sampling occurs at peaks (72) of the symbols of an input signal. The input signal is a readback signal of a magnetic recording device (43 and 48). The peak-sampled signal is input to a tapped delay circuit (148) having two major weighted taps (102 and 104) between first and second series of minor weighted taps (106 and 108). Thus, the sample taken at the peak of an isolated symbol will generate a high-level pulse (112 and 114) at each of the two tap outputs of the major weighted tap.

FIG. 2

## Description

The present invention relates generally to a signal processing system and method and more particularly to signal processing for Class 4 partial response.

In signal processing systems, such as those employed with magnetic recording devices, digital data are encoded into a series of symbols. For digital magnetic recording, readback symbols ideally have a limited number of amplitudes, e.g. -1, 0 and +1 at sampling instants. However, all channels have non-ideal characteristics which cause various types of distortions. A distortion which is caused by the overlap of adjacent symbols is referred to as "intersymbol interference" (ISI). That is, ISI is the extension of a data symbol into preceding or following symbol intervals.

While ISI is a form of distortion, a controlled amount of ISI can be intentionally introduced in order to provide a more efficient use of the bandwidth of a particular channel. High density digital magnetic recording usually operates in the regime of limited bandwidth. As a consequence, an unequalized symbol, or transition response, is frequently wider than the Nyquist pulse appropriate for the fixed symbol interval. Magnetic transitions on a magnetic recording medium may be sufficiently spaced to ensure that two symbols are not in adjacent symbol intervals of a read signal, but this would result in an inefficient use of the medium. Partial response signaling allows a controlled amount of ISI that can be taken into account during subsequent processing.

Partial response channels include duobinary $(1 + D)$, dicode $(1 - D)$, and Class 4 $(1 - D^2)$ channels. For these channels, "D" represents a delay of a single symbol interval, while "$D^2$" represents a delay of two symbol intervals. U. S. Pat. No. 3,648,265 to Kobayashi et al. describes use of Class 4 partial response signaling for a digital magnetic recording system.

It is common for the transition response of a channel of a magnetic recording system to vary with time. Causes of random variation include fluctuations in the flying height of a read/write head, fluctuations in the properties of the recording medium, and changes in radii among the tracks of a hard disk. Adaptive equalization may be used as a means to offset the random variations. Equalization may be in the form of a transversal filter having tap weights that are adjusted with detection of variations that affect the transition response of a channel.

Two significantly different types of equalizers may be referred to as "zero-forcing equalizers" and "least mean-square equalizers." For a zero-forcing equalizer, tap weights are selected to force samples to zero at all but one instant in a span of the equalized transition response. If the number of taps of a zero-force equalizer were infinite, zero ISI would be achieved. However, when the number of taps is finite, only a finite number of samples near the center sample is forced to zero. Samples not located at the forced range may not be zero, and quite often can be very large. Therefore, this type of equalizer typically will not achieve the desired equalization. A use of zero-force equalization is described by Newby et al. in "High Density Digital Recording Using Video Cassette Recorders," IEEE Transactions on Magnetics, Vol. Mag-19, No. 5, September 1993, pages 2245-2252.

Tap weights of a least mean-square equalizer are selected with the goal of minimizing mean-square error, i.e. the square of the sum of the noise and ISI at the output of the equalizer. Thus, least mean-square equalization is better suited to severely band-limited channels.

A reversal in direction of magnetization (i.e., a magnetic transition) on the magnetic recording medium generates a symbol, or pulse, when encountered by a read head. In general, the symbol is bell shaped and is aligned with the transition. In order to decode the digital data, the signal is sampled once per symbol interval. The sampling phase that is selected for conventional Class 4 overall-system partial response equalization (i.e., PR4) is 180° sampling, which provides generally equal amplitude samples on both sides of a symbol. This is because the 180° sampling phase achieves an output which most closely resembles the desired PR4 response.

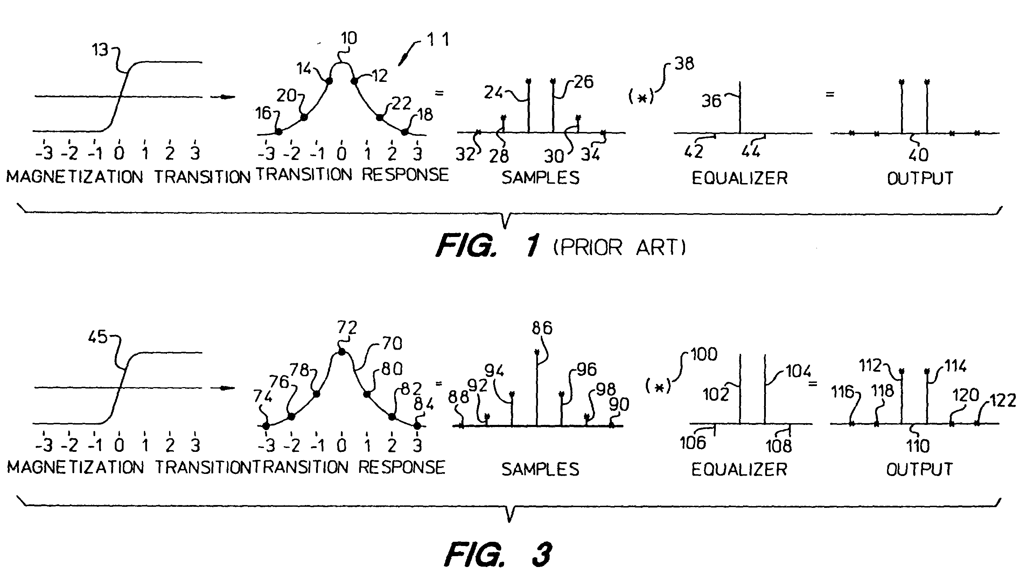

With reference to Fig. 1, as a read head is moved relative to a magnetic recording medium, it may encounter a magnetization transition 13 on the medium. The transition 13 is shown as being detected by the read head at symbol interval "0." In response, the read head generates a transition response 11, or symbol, having a peak 10 that is aligned with the magnetic transition. For purposes of this disclosure, the peak is therefore defined as having a 0° phase shift with respect to the symbol interval. The 180° phase sampling generates samples at points 12, 14, 16, 18, 20 and 22. As a result of the sampling, a pair of high-level samples 24 and 26 are obtained, as well as pairs of low-level samples 28 and 30 and zero-level samples 32 and 34.

From the sampler, the data is received at an equalizer. Class 4 equalization typically utilizes an adaptive finite-impulse response (FIR) filter. The FIR filter includes a number of taps that are adaptively weighted. The tap weights include a major weighted tap, typically in the center, as represented by level 36 in Fig. 1, and include a number of minor taps. The major tap is referred to as "major," since it provides a high-level contribution at its tap output for each high-level sample 24 and 26. On the other hand, the minor taps ideally generate lower-level contributions at the individual tap outputs.

From the convolution, as represented by the convolution symbol 38 in Fig. 1, the FIR filter has a target output 40 of 0, 0, 1, 1, 0, 0, ... . Control circuitry continuously adjusts coefficients of the major tap and minor taps in order to more closely approximate the target output.

The target output 40 is achieved using conventional 180° sampling and a conventional equalizer. Sampling at 180° provides an approximate match with the channel, so that the Class 4 overall-system partial response equalization target output is realized with the FIR filter having side taps 42 and 44 that are relatively small in amplitude.

What is needed is a signal processing system and method in which the benefits of Class 4 equalization are achieved, but with a reduced high-frequency boost and a better signal-to-noise ratio at the output of the equalizer.

The invention is a signal processing system and method in which Class 4 overall-system partial response equalization is achieved in the non-conventional manner of sampling at a zero degree phase shift with respect to symbol peaks and filtering the resulting stream of samples by means of a tapped delay circuit having a pair of major weighted taps. The phase of the sampling is controlled to generate a sample level at the initiation of each symbol interval along a data signal, with the sample level corresponding to the signal amplitude at the initiation of the symbol interval. In one application of the invention within a digital magnetic recording device the initiation of symbol intervals will correspond to peaks of symbols. The major weighted taps are positioned between first and second series of minor weighted taps. Consequently, an equalized output will have overall-system Class 4 characteristics.

The signal processing system includes a sampling circuit for forming the stream of samples in which the amplitude level of each sample is based upon the amplitude of the data signal at the time of sampling. A clock circuit controls the sampling circuit, with the target of triggering samples in a manner synchronous with the initiations of symbol intervals of the data signal and with the occurrence of symbol peaks. As a result, a single high-level sample will be generated when an isolated symbol is sampled. Because the symbol is isolated from other symbols, a number of low-level samples will also be generated.

The resulting stream of samples is input to the tapped delay circuit. Each of the two major weighted taps will have a high-level tap output at the time in which the high-level sample reaches the major weighted taps. Because the two major weighted taps are separated by a delay, the two high-level outputs do not exist simultaneously. Preferably, the delay between adjacent taps is a delay that corresponds to the symbol time of the signal processing system.

Each minor weighted tap has a low-level tap output and is separated from adjacent weighted taps by a fixed delay. A summer receives each tap output from the major and minor weighted taps and provides a summed output having Class 4 overall-system response characteristics. The "overall system" is defined herein as circuitry that begins with the generation of the symbols, e.g., the read head of a digital magnetic recording device, and continues to the formation of the equalized output.

The system and method are best suited for use within the digital magnetic recording device. Preferably, the various components are components of a least means-square equalizer. An advantage of the system and method is that the benefits of Class 4 overall-system partial response equalization are realized, while an increase in the signal-to-noise ratio of such a channel is achieved. A partial response system provides a more efficient use of the bandwidth of a given channel by introducing a controlled amount of ISI that is subsequently taken into account. In experimentation, Class 4 partial response-prerecorded data was written on a magnetic disk at a linear density of approximately fifty percent higher than the linear density typically achieved with existing RLL (run length limited coded) channel. A readback signal was captured using a digitizing oscilloscope. Sampled adaptive equalization was then performed on the data in a computer simulation, using both conventional 180° sampling techniques and the 0° sampling techniques of the invention. The equalization with 0° sampling gave a signal-to-noise ratio that was 1.9 dB greater than equalization using the conventional 180° sampling.

Another advantage of the invention is that signal improvements can be achieved without a great amount of circuit complexity. With regard to sampling, the sampling rate is unchanged, since only the timing is different than the conventional system and method. With respect to the tapped delay line, a second major tap is added.

Fig. 1 is an operational view of Class 4 partial response equalization in accordance with the prior art.

Fig. 2 is a block diagram of a magnetic disk read/write assembly that includes a signal processing system in accordance with the invention.

Fig. 3 is an operational view of Class 4 partial response equalization in accordance with the invention.

Fig. 4 is a circuit embodiment of an exemplary signal processing system for achieving the operation shown in Fig. 3.

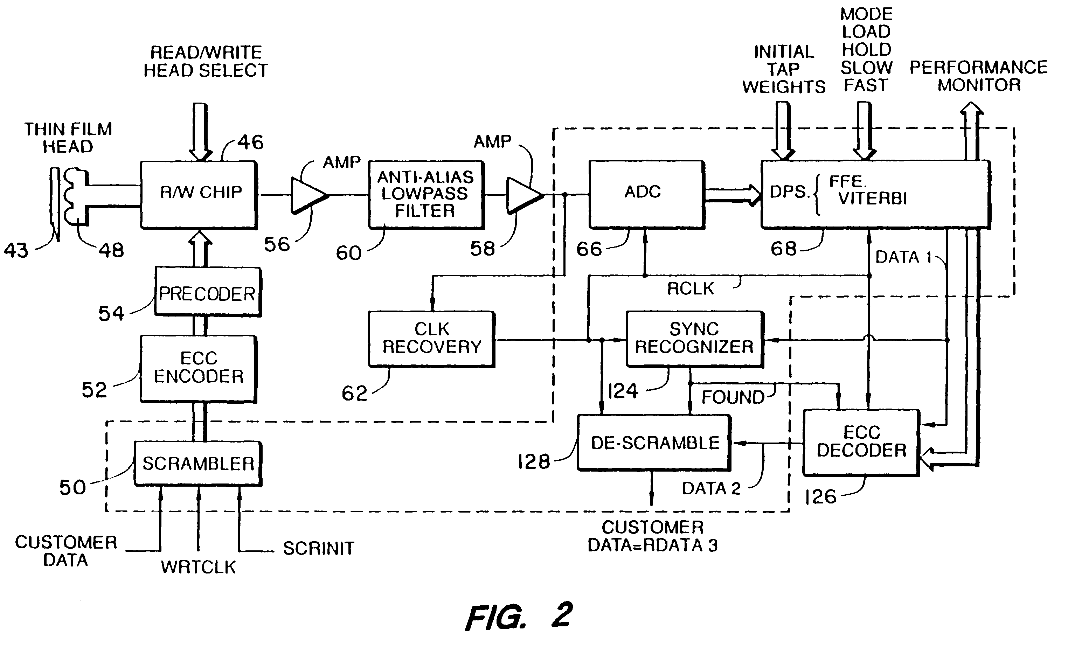

With reference to Fig. 2, a magnetic recording device is shown for reading and writing data on a magnetic disk 43. The device includes a standard read/write integrated circuit chip 46 that is electrically connected to a thin film head 48. In a writing mode, a scrambler 50 receives a customer data input, a write clock input and resets in order to output scrambled data to be written on a sector of the magnetic disk 43. The scrambler may process the customer data with a pseudo random sequence.

Error correction code (ECC) encoding is performed at block 52 after the scrambling, so as to avoid error propagation in subsequent descrambling. Class 4 partial response precoding is provided at block 54. The polarity of writing current is based upon whether a "1" or a "0" is at the output of the precoder 54.

A pair of amps 56 and 58 are positioned between an anti-aliasing filter 60. The output of the second amp 58 is received at a clock recovery circuit 62. The clock recovery circuit derives a coherent clock from the output of the second amp.

An analog-to-digital converter 66 provides an output to a digital signal processing system (DPS) 68 that includes a feedforward equalizer (FFE) and one or more Viterbi decoders.

Inputs to the DPS 68 may include an 8-bit output from the analog-to-digital converter 66, but an 8-bit output is not critical.

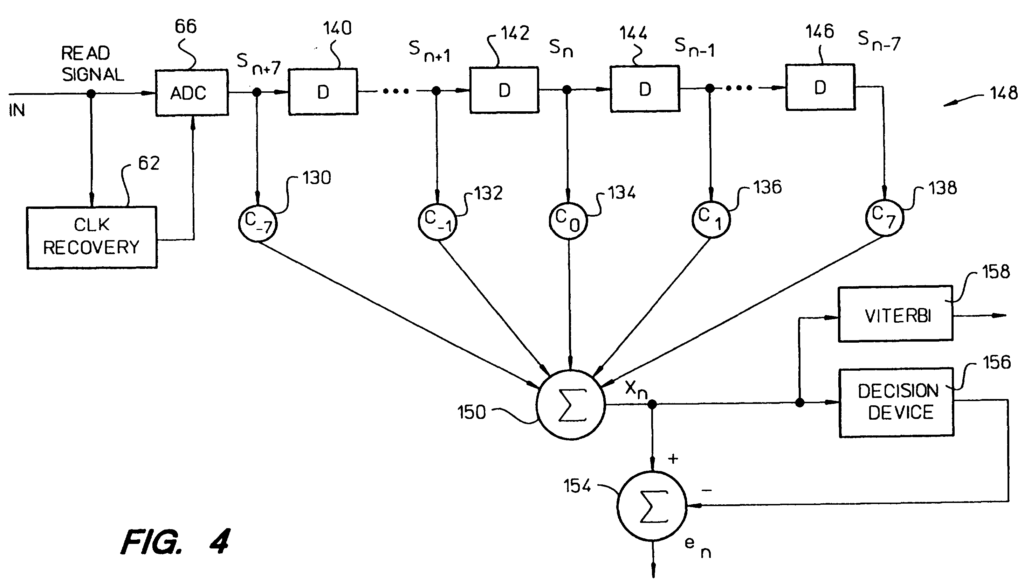

Referring to Figs. 2 and 3, a magnetic transition 45 on the disk 43 will cause the read/write head 48 to generate a symbol or transition response, which is then input to the analog-to-digital converter 66. A symbol 70 that is isolated from other symbols is shown in Fig. 3. The peak of the symbol 70 is aligned with symbol interval "zero." The symbol is an input to the analog-to-digital converter 66. The symbol is sampled once per symbol interval, with one sampling point 72 occurring at the peak of the symbol. Other sampling points 74, 76, 78, 80, 82 and 84 occur at initiation of each previous and subsequent symbol interval. The clock recovery component 62 plays the role of synchronizing the sampling with the symbol intervals. The output of the analog-to-digital converter is a stream of samples having levels that correspond to the symbol 70. In Fig. 3, the sample stream is shown as having a high-level sample 86, a pair of zero-level samples 88 and 90, and two pairs of low-level samples 92, 94, 96 and 98.

The sampled symbol received at the DPS 68 undergoes convolution, as represented by convolution symbol 100 in Fig. 3. As previously noted, conventional tap delay lines of digital processing systems include a single major tap. However, the convolution 100 is performed by means of a circuit having two major weighted taps 102 and 104. In addition, the equalizer includes minor weighted taps 106 and 108. The number of weighted taps is not critical to the operation of the invention, but should be sufficient to generate an equalizer output 110 having Class 4 response characteristics. The output 110 is a target output for Class 4 overall-system partial response equalization, since it includes adjacent high-level pulses 112 and 114 between pairs of zero-level "pulses" 116, 118, 120 and 122.

The Viterbi decoder operates in the manner known in the art. Inputs to the DPS include signals for setting the initial tap weights and a mode signal. While not critical to the invention, a performance monitor may be included to provide diagnostic information for detecting system degradation. A sync recognizer 124 receives a binary data output from the Viterbi decoder, as well as a signal from the clock recovery circuit 62 to set an ECC decoder 126 and a descrambler 128 in order to inform the decoder and descrambler as to when data begins. The descrambler removes the effect of the scrambler 50 that was used in writing the customer data. In order to avoid error propagation in the descrambler, the ECC decoder 126 is positioned between the Viterbi decoder and the descrambler. The Viterbi decoder performs maximum likelihood decoding of information inputted to the Viterbi decoder from a summing junction 150 of the FFE.

An exemplary digital processing system is shown in Fig. 4. The feedforward equalizer 148 of this exemplary system is a transversal filter having a tap delay line that is associated with tap weights, i.e. tap coefficients, 130, 132, 134, 136 and 138. The tap delay line has a series of delays 140, 142, 144 and 146. While they are not all shown, the feedforward equalizer 148 includes fifteen delays and fifteen tap weights. However, this number is not critical to the invention.

Preferably, each tap delay 140-146 provides a delay of one symbol interval. Each tap coefficient 130-138 is operationally associated with one of the delays and multiplies any signal at the associated delay, providing one of fifteen inputs to a first summing junction 150. The fifteen inputs to junction 150 are added to provide signal $x_n$. The tap coefficients are continuously adjusted in a manner to be described below. Adjustment is made so as to more closely approximate the target output 110 of Fig. 3 and to reduce interference of a data symbol with preceding and following symbols, i.e. reduce ISI.

The combination of the delay 142 with the tap weight 134 and the combination of the delay 144 with the tap weight 136 are referred to as "major weighted taps," since a high-level sample will result in a high-level tap output to junction 150 from the two tap weights 134 and 136. On the other hand, the tap outputs of the remaining tap weights 130, 132 and 138 will be at a low-level despite the presence of a high-level sample to the tap weights. Thus, the feedforward equalizer includes two major weighted taps and upstream and downstream series of "minor weighted taps." Referring to Figs. 3 and 4, through a convolution process 100, when a single high-level sample 86 reaches the pair of major weighted taps 102 and 104 the equalizer output 110 is provided.

The signal $x_n$ is the sum of the multiplied inputs from the tap weights 130-138. That is,

$$x_n = \sum_{i=-7}^{7} c_i S_{n-i}$$

where $c_i$ represents the adaptive value of the tap weight number i and $S_{n-i}$ represents the signal level at the location along the tapped delay line associated with the tap weight number i.

The output $x_n$ of the feedforward equalizer 148 is an input to a second summing junction 154 and is an input signal to a decision device 156 and to a Viterbi decoder 158. The Viterbi decoder performs a maximum likelihood estimation of the originally encoded data. The decision device 156 provides an estimate of an output data sample to be -1, 0, or +1. The estimate is used as an input to the second summing junction 154 for adaptively adjusting the tap weights 130-138 of the feedforward equalizer 148.

The second summing junction 154 determines the difference between the signal level $x_n$ and the data sample level from the decision device 156. For example, if $x_n$ is equal to +0.9, and the second input to the summing junction 154 is +1, the second summing junction 154 outputs the difference between the two values, i.e. -0.1. The output $e_n$ of the second summing junction is an error signal that is used at the feedforward equalizer 148.

The tap weights 130-138 are adjusted in a least mean-square error sense. The output signal $e_n$ from the second summing junction 154 is received at a tap coefficient control circuit for the feedforward equalizer 148. The control circuit adjusts the tap weights 130-138 so that at a time one symbol interval later (n + 1), the value of each tap weight ($c_i$) is equal to the value of that tap weight at the current clock cycle (n) minus the product of a constant ($\alpha$) times the signal $e_n$ and times the signal level ($S_{n-i}$) at the delay 140-146 operatively associated with the tap weight ($c_i$). That is,

$$c_i^{(n+1)} = c_i^{(n)} - \alpha \, (S_{n-i}) \, (e_n)$$

The signal processing described with reference to Fig. 3 may be achieved using circuits other than those shown in Figs. 2 and 4. Important to operation of a circuit in accordance with the invention is that the sampling take place at a zero degree phase shift with respect to a peak of an isolated symbol. That is, sampling should occur at initiation of a symbol interval. Also important is that the tapped delay line include two major weighted taps, so that a Class 4 overall-system partial response output can be attained for the peak-sampled signal.

Reference Numerals

Class 4 Response Using Peak Sampling

| | | | | |
|---|---|---|---|---|
| 10 | peak | 58 | second amp |
| 12 | point | 60 | anti-aliasing filter |
| 14 | sampling point | 62 | clock recovery |
| 16 | sampling point | 64 | dashed lines |
| 18 | sampling point | 66 | analog-to-digital converter |
| 20 | sampling point | 68 | digital signal processing system |
| 22 | sampling point | 70 | symbol |
| 24 | high-level samples | 72 | sampling point |
| 26 | high-level samples | 74 | sampling point |
| 28 | low-level samples | 76 | sampling point |
| 30 | low-level samples | 78 | sampling point |
| 32 | zero-level samples | 80 | sampling point |
| 34 | zero-level samples | 82 | sampling point |
| 36 | major weight tap | 84 | sampling point |
| 38 | symbol | 86 | high-level sample |
| 40 | equalizer output | 88 | zero-level sample |
| 42 | negative side taps | 90 | zero-level sample |
| 43 | disk | 92 | low-level sample |
| 44 | negative side taps | 94 | low-level sample |
| 45 | magnetic transition | 96 | low-level sample |
| 46 | read/write chip | 98 | low-level sample |
| 48 | head | 100 | convolution symbol |
| 50 | scrambler | 102 | major weighted taps |
| 52 | ECC block | 104 | major weighted taps |
| 54 | NRZI block and PR4 | 106 | negative minor weighted taps |
| 56 | first amp | 108 | negative minor weighted taps |

```
110 equalizer output

112 high-level pulses

114 high-level pulses

116 zero-level pulses

118 zero-level pulses

120 zero-level pulses

122 zero-level pulses

124 sync recognizer

126 ECC decoder

128 descrambler

130 tap weights

132 tap weights

134 tap weights

136 tap weights

138 tap weights

140 tap delays

142 tap delays

144 tap delays

146 tap delays

148 feedforward equalizer

150 summing junction

154 third summing junction

156 decision device

158 Viterbi decoder
```

## Claims

1. A signal processing system for a data signal having a sequence of data symbols having peaks comprising:

   sampling means (66) for forming a stream of samples (45) in which an amplitude of each sample is based upon an amplitude of said data signal at a time of sampling;

clock means (62), operatively associated with said sampling means, for fixing sampling substantially at said peaks (10) of said data symbols; and

a tapped delay circuit (148) having an input connected to said sampling means to receive said stream of samples, said tapped delay circuit having a series of weighted taps (102, 104, 106, 108; 140, 142, 144, and 146), including adjacent first and second major weighted taps (102, 104) between first and second pluralities of minor weighted taps (106, 108), wherein an output (110) of said tapped delay circuit has characteristics of a Class 4 overall-system partial response output.

2. The system of claim 1 wherein said tapped delay circuit (148) is an adaptive filter in which each of said weighted taps (140, 142, 144 and 146) has a tap coefficient (130, 132, 134, 136 and 138), said adaptive filter having a control circuit (154) for adaptively adjusting said tap coefficients in response to said output (110) of said tapped delay circuit.

3. The system of claim 1 or 2 further comprising a source (48) of said data signal, said source including a magnetic read head.

4. The system of claim 1, 2 or 3 wherein said sequence of data symbols has a symbol interval, said clock means (62) and said sampling means (66) being connected to initiate a sample (45) generally at a commencement of each symbol interval.

5. The system of claim 1, 2, 3 or 4 wherein said tapped delay circuit (148) is a least means square equalizer.

6. The system of claim 2 wherein said tap coefficients (130, 132, 134, 136 and 138) are adjusted such that when an isolated symbol is sampled and processed through said tapped delay circuit, said output (110) of said tapped delay circuit then includes a pair of generally equal and adjacent non-zero levels (112 and 114) between first and second time periods in which said output remains substantially at a zero level for multiple symbol intervals.

7. The system of claim 1, 2, 3, 4, 5 or 6 wherein said sampling means (66), said clock means (62) and said tapped delay circuit (148) are components of a Class 4 partial response equalizer.

8. A method of processing a data signal having data symbols for which peaks (72) have a substantially 0° phase shift to initiation of symbol intervals of said data signal, the method comprising the steps of:

sampling (66) each data symbol substantially at said peaks such that said sampling at a peak generates a high-level sample (86), said sampling thereby forming a stream of samples (88, 90, 92, 94, 96 and 98); filtering said stream of samples such that each high-level sample initiates first and second high-level tap outputs (112 and 114) in a sequence between initiating first and second pluralities of low-level tap outputs (116, 118, 120 and 122), said filtering including inputting said stream of samples into a tapped delay circuit (148) having a pair of adjacent major weighted taps (102 and 104) between first and second pluralities of minor weighted taps (106 and 108); and

summing tap outputs of said tapped delay circuit such that a signal (110) having Class 4 overall-system partial response characteristics is formed.

9. The method of claim 8 further comprising the step of utilizing a magnetic read head (48) to form said data signal from a magnetic disk (43).

10. The method of claim 8 or 9 wherein sampling (66) each data symbol includes clocking (62) said sampling such that said sampling is maintained at a 0° phase shift to initiation of said symbol intervals.

MAGNETIZATION TRANSITION TRANSITION RESPONSE    SAMPLES    EQUALIZER    OUTPUT

*FIG. 1* (PRIOR ART)

MAGNETIZATION TRANSITION TRANSITION RESPONSE    SAMPLES    EQUALIZER    OUTPUT

*FIG. 3*

9

FIG. 2

FIG. 4

EP 0 724 262 A2